# EUROPEAN PATENT SPECIFICATION

(11) **EP 1 627 778 B1**
(45) Date of publication and mention of the grant of the patent: **31.08.2016**
(21) Application number: 04425276.5
(22) Date of filing: 21.04.2004
(51) Int. Cl.: H04L 12/54, H04L 29/06, H04L 12/66, B60R 16/02

(54) **Vehicle with 2 wireless networks and a gateway connecting both**
Kraftfahrzeug mit 2 drahtlose Netzwerke und einer beide Netzwerke verbindendes Gateway
Véhicule avec 2 réseaux sans fil et une passerelle connectant ces deux

(43) Date of publication of application: 22.02.2006
(73) Proprietor: C.R.F. Società Consortile per Azioni, 10043 Orbassano (Torino) (IT)
(72) Inventor: Carrea, Paola,, 10043 Orbassano (IT); Pratesi, Massimo,, 10043 Orbassano (IT); Pighi, Osman,, 10020 Riva Presso Chieri (IT)
(74) Representative: Cerbaro, Elena

(56) References cited:
- EP-A- 1 197 396
- EP-A- 1 254 811
- EP-A- 1 361 713
- WO-A-97/28988
- WO-A-03/051677

## Description

The present invention relates to a system for controlling on-vehicle electrical loads.

As is known, modern motor vehicles are equipped with a number of electric loads (e.g. headlights, power windows, electric actuators, electric motors, airbags, seatbelt tensioners, and electronic devices such as a radio, satellite navigation system, etc.) wired electrically to driver-operated control devices.

The electric wiring involved calls for the use of a large number of wires extending to a considerable total length inside the vehicle (as much as several kilometres in top-of-the-range vehicles). Such wires are bulky, heavy, and, taking installation into account, of far from negligible cost.

Electric wiring also poses other problems, such as:
- poor access to connection points (in many parts of the vehicle, wire passage may be critical);
- electromechanical stability (wires are subject to mechanical stress, e.g. vibration, which may jeopardize continuity of the connection);
- the need for special connectors, which further increases cost and the complexity of the network and system as a whole.

The recent introduction of additional driver-support functions (e.g. telecommunication and/or vehicle safety devices), based on evolutionary changes to existing functions, has led to a further increase in the total length and complexity of the wiring involved.

To simplify wiring, some manufacturers have proposed using serial local networks (e.g. CAN or LIN networks) to transfer commands from the driver to the on-vehicle electrical loads.

EP 1 361 713 discloses a gateway device (GW) for connecting and communicating between at least a first and a second wired or wireless communication system, in which said gateway device (GW) is a generic gateway device being dynamical and/or adjustable with respect to the addition and/or removal of at least one wired or wireless communication system (DBj, NB), protocol conversion or protocol conversion data, data stream encoder and/or decoder data, bus or device presentation data, and/or the like.

Unfortunately, the reduction in interconnections afforded by such local networks has been substantially limited, also on account of the need for additional on-vehicle functions.

It is an object of the present invention to provide a system for controlling on-vehicle-electrical loads designed to eliminate the drawbacks of known systems.

According to the present invention, there is provided a system for controlling on-vehicle electrical loads, as claimed in the accompanying claims.

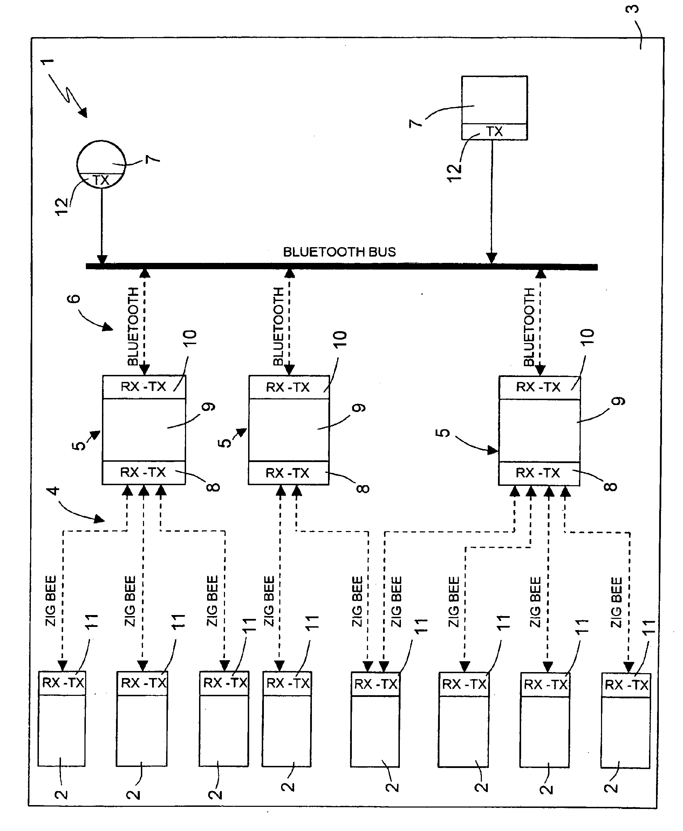

The invention will now be described with particular reference to the accompanying drawing, which shows, schematically, a system for controlling on-vehicle electrical loads, such as a motor vehicle, train, ship, or aircraft.

Number 1 in the accompanying drawing indicates as a whole a system for controlling electrical loads 2 of a vehicle 3 (shown schematically). For the sake of simplicity, the present invention will be described with reference to a motor vehicle, purely by way of example.

On-vehicle electrical loads 2 generically comprise a device operated directly by an electric command (e.g. a lamp which is turned on on receiving an electric signal) or an electric/mechanical/hydraulic/pneumatic device operated by an electric command (e.g. a headlight-washer operated by an electric command). By way of a non-limiting example, on-vehicle electrical loads 2 may comprise headlights, power windows, electric actuators, electric motors, airbags, seatbelt tensioners, and electronic devices such as a radio, satellite navigation system, etc.

According to the present invention, there are provided:
- a first wireless communication system 4 interposed between on-vehicle electrical loads 2 and a number of main interconnection devices 5; and
- a second wireless communication system 6 interposed between driver-operated control members 7 and main interconnection devices 5.

First wireless communication system 4 conveniently has a lower transmission speed than second wireless communication system 6; and the transmission protocol of first wireless communication system 4 is simpler than that of second wireless communication system 6.

For example, first wireless communication system 4 may be formed using so-called ZigBee™ technology, and second wireless communication system 6 using so-called Bluetooth™ technology.

ZigBee™ technology, in fact, is mainly designed for control applications, and is therefore suitable for replacing all or at least some of the connections to on-vehicle electrical loads 2.

Bluetooth™ technology, on the other hand, is more suitable for more complex connection and control applications, and provides, for example, for handsfree (e.g. voice) commands.

ZigBee™ technology has a protocol suitable for controlling simple, low-power devices involving a large number of nodes, whereas Bluetooth™ technology is used for applications requiring greater data transfer capacity.

More specifically, the ZigBee™ communication protocol and data format are as follows:
- Band: ISM and around 900 MHz
- Simultaneous channels: max 256
- Data throughput: 250 kbps (approx.)
- Voice throughput: 0 kbps (i.e. does not have a set/dedicated voice channel)

The Bluetooth™ communication protocol and data format are as follows:
- Band: ISM
- Simultaneous channels: max 8
- Data throughput: 720 kbps (approx.)
- Voice throughput: 280 kbps (approx.)

The result is a control system employing no electric wires, and integrating two different technologies (ZigBee ™ and Bluetooth™ in the example shown), thus achieving greater flexibility as compared with the known art, and implementing more functions than currently available.

Each main interconnection device 5 comprises a first transmitting/receiving module 8 for transmitting/receiving data through first wireless communication system 4; a hardware or software interface module 9 (wireless gateway) for interfacing the two wireless communication systems and converting the communication protocol and data format (CPDF) of second wireless communication system 6 to the communication protocol and data format of first wireless communication system 4, and vice versa; and a second transmitting/receiving module 10 for transmitting/receiving data through second wireless communication system 6.

Analogously, on-vehicle electrical loads 2 are provided with a third transmitting/receiving module 11 for transmitting/receiving data through first wireless communication system 4, and control members 7 are provided with a transmitting module 12 for transmitting data through second wireless communication system 6.

The commands imparted by the driver using control members 7 are thus transferred via second wireless communication system 6 to main interconnection devices 5 connected to on-vehicle electrical loads 2 by first wireless communication system 4.

An overall star-shaped or, more generally, hybrid network is thus formed.

By way of example, the following is a description of a connection, in accordance with the present invention, between an on-vehicle electrical load 2 defining a headlight-washer of the vehicle, and a control member 7 defining the headlight-washer control button.

The headlight-washer may be operated as follows:
- the driver operates control member 7 relative to the headlight-washer; if Bluetooth™ technology is used, operation may be voice-controlled by the driver;
- the command (e.g. voice command) is recognized;
- first wireless communication system 4 is activated by a command from second wireless communication system 6;
- the command coded according to the protocol of second wireless communication system 6 (Bluetooth ™ in the example) is translated into the format recognized by first wireless communication system 4 (ZigBee™ in the example) - the translation is performed (in known manner) in main interconnection devices 5;
- the command is transmitted to the headlight-washer over first wireless communication system 4 (ZigBee™ in the example); and
- the required function is activated.

The control system according to the present invention therefore provides for eliminating any wired connections.

The system according to the present invention therefore provides for:
reducing the total weight, bulk and cost of electric wiring and associated installation/maintenance procedures (if any);
greater flexibility of the on-vehicle network; voice-activated driver controls, if the Bluetooth™ protocol is used, thus enabling the driver to keep his hands on the wheel and concentrate fully on the road; and additional on-vehicle functions, even in the absence of prearrangements.

Clearly, changes may be made to the control system as described and illustrated herein without, however, departing from the scope of the present invention as defined in the accompanying Claims.

For example, on-vehicle electrical loads 2 may all be controlled by a single main interconnection device 5.

Wireless communication technologies other than those described may be used. In particular, as opposed to short-range wireless communication technology, second wireless communication system 6 may employ medium- or long-range wireless communication technologies, such as Wi-Fi, IrDA (infrared), etc.

Finally, in addition to motor vehicles, the control system according to the invention may be used on any type of vehicle, such as ships, trains, aircraft, etc.

## Claims

1. A vehicle comprising:
• on-board electrical loads (2) including one or more of the following: headlights, power windows, electric actuators/motors, airbags, electrically-controlled electric/mechanical/hydraulic/pneumatic devices; and
• an on-board control system operable to control said on-board electrical loads (2);
wherein said on-board control system comprises:
• user-operable control members (7) to generate commands for said electrical loads (2);
• an interconnection device (5);
• a second wireless communication system (6) operable to connect said control members (7) to said interconnection device (5) to transmit user-generated commands to said interconnection device (5);
• a first wireless communication system (4) operable to connect said interconnection device (5) to said electrical loads (2) to operate said electrical loads (2) in response to user-generated commands received by said interconnection device (5);
wherein said first wireless communication system (4) has a different communication protocol and/or data format from said second wireless communication system (6), a lower transmission speed than said second wireless communication system (6), and is configured to permit simultaneous activation of a higher number of communication channels than said second wireless communication system (6);
wherein said second wireless communication system (6) comprises:
• a second transceiver module (10) provided on said main interconnection device (5); and
• a fourth transceiver module (12) provided on each control member (7) and operable to communicate with said second transceiver module (10);
wherein said first wireless communication system (4) comprises:
• a first transceiver module (8) provided on said main interconnection device (5); and
• a third transceiver module (11) provided on each electrical load (2) and operable to communicate with said first transceiver module (8); and
wherein said interconnection device (5) comprises:
• interface means (9) operable to interface said first and second wireless communication systems (4, 6) to convert the communication protocol and data format of said second wireless communication system (6) into the communication protocol and data format of said first wireless communication system (4), and vice versa.

2. A vehicle as claimed in any one of the foregoing Claims, wherein said second wireless communication system (6) is based on Bluetooth technology.

3. A vehicle as claimed in any one of the foregoing Claims, wherein said first wireless communication system (4) is based on ZigBee technology.

4. A vehicle as claimed in any one of the foregoing Claims, wherein said second wireless communication system (6) is based on Wi-Fi technology.

5. A vehicle as claimed in any one of the foregoing Claims, wherein said vehicle is a motor vehicle.

## Patentansprüche

1. Fahrzeug, umfassend:
- fahrzeuggebundene elektrische Verbraucher (2), enthaltend eines oder mehreres unter den folgenden: Scheinwerfer, Fensterheber, elektrische Aktuatoren/Motoren, Airbags, elektrisch gesteuerte elektrische/mechanische/hydraulische/pneumatische Geräte; und
- ein fahrzeuggebundenes Steuersystem, betätigbar zum Steuern der fahrzeuggebundenen Verbraucher (2);
- wobei das fahrzeuggebundene Steuersystem umfasst;
- benutzerbetätigbare Steuerelemente (7) zum Erzeugen von Befehlen für die elektrischen Verbraucher (2);
- ein Interkonnektionsgerät (5);
- ein zweites Drahtloskommunikationssystem (6), betätigbar zum Verbinden der Steuerelemente (7) mit dem Interkonnektionsgerät (5) zum Übertragen benutzergenerierter Befehle zu dem Interkonnektionsgerät (5);
- ein erstes Drahtloskommunikationssystem (4), betätigbar zum Verbinden des Interkonnektionsgerätes (5) mit den elektrischen Verbrauchern (2) zum Betätigen der elektrischen Verbraucher (2) in Antwort auf benutzererzeugte Befehle, empfangen durch das Interkonnektionsgerät (5);
wobei das erste Drahtloskommunikationssystem (4) über ein unterschiedliches Kommunikationsprotokoll und/oder Datenformat von dem zweiten Drahtloskommunikationssystem (6) verfügt, über eine niedrigere Übertragungsgeschwindigkeit als das zweite Drahtloskommunikationssystem (6), und konfiguriert ist zum Erlauben gleichzeitiger Aktivierung einer höheren Anzahl an Kommunikationskanälen als das zweite Drahtloskommunikationssystem (6);
wobei das zweite Drahtloskommunikationssystem (6) umfasst:
- ein zweites Transceivermodul (10), bereitgestellt an/bei dem Hauptinterkonnektionsgerät (5); und
- ein viertes Transceivermodul (12), bereitgestellt an/bei jedem Steuerelement (7) und betätigbar zum Kommunizieren mit dem zweiten Transceivermodul (10);
wobei das erste Drahtloskommunikationssystem (4) umfasst:
- ein erstes Transceivermodul (8), bereitgestellt an/bei dem Hauptinterkonnektionsgerät (5); und
- ein drittes Tranceivermodul (11), bereitgestellt an/bei jedem elektrischen Verbraucher (2) und betätigbar zum Kommunizieren mit dem ersten Transceivermodul (8); und
- wobei das Interkonnektionsgerät (5) umfasst:
- Schnittstellenmittel (9), betätigbar als Schnittstelle zwischen den ersten und zweiten Drahtloskommunikationssystemen (4, 6) zum Wandeln des Kommunikationsprotokolls und Datenformates von dem zweiten Drahtloskommunikationssystem (6) in das Kommunikationsprotokoll und Datenformat des ersten Drahtloskommunikationssystems (4) und vice versa.

2. Fahrzeug nach einem der vorangegangenen Ansprüche, bei welchem das zweite Drahtloskommunikationssystem (6) auf Bluetooth-Technologie basiert.

3. Fahrzeug nach einem der vorangegangenen Ansprüche, bei welchem das erste Drahtloskommunikationssystem auf ZigBee-Technologie basiert ist.

4. Fahrzeug nach einem der vorangegangenen Ansprüche, bei welchem das zweite Drahtloskommunikationssystem auf Wi-Fi-Technologie basiert ist.

5. Fahrzeug nach einem der vorangegangenen Ansprüche, bei welchem das Fahrzeug ein Kraftfahrzeug ist.

## Revendications

1. Véhicule comprenant :
- des charges électriques embarquées (2) comportant un ou plusieurs parmi ce qui suit : des phares, des vitres électriques, des actionneurs/moteurs électriques, des coussins de sécurité gonflables, des dispositifs électriques/mécaniques/hydrauliques/pneumatiques à commande électrique ; et
- un système de commande embarqué servant à commander lesdites charges électriques embarquées (2) ;
dans lequel ledit système de commande embarqué comprend :
- des éléments de commande (7) actionnables par un utilisateur pour générer des instructions pour lesdites charges électriques (2) ;
- un dispositif d'interconnexion (5) ;
- un deuxième système de communication sans fil (6) adapté pour connecter lesdits éléments de commande (7) audit dispositif d'interconnexion (5) pour transmettre les instructions générées par l'utilisateur audit dispositif d'interconnexion (5) ;
- un premier système de communication sans fil (4) adapté pour connecter ledit dispositif d'interconnexion (5) auxdites charges électriques (2) pour faire fonctionner lesdites charges électriques (2) en réponse aux instructions générées par l'utilisateur reçues par ledit dispositif d'interconnexion (5) ;
dans lequel ledit premier système de communication sans fil (4) présente un protocole de communication et/ou un format de données différents de ceux dudit deuxième système de communication sans fil (6), une vitesse de transmission inférieure à celle dudit deuxième système de communication sans fil (6), et est configuré pour permettre une activation simultanée d'un nombre de canaux de communication supérieur à celui dudit deuxième système de communication sans fil (6) ;
dans lequel ledit deuxième système de communication sans fil (6) comprend :
- un deuxième module émetteur-récepteur (10) prévu sur ledit dispositif d'interconnexion principal (5) ; et
- un quatrième module émetteur-récepteur (12) prévu sur chaque élément de commande (7) et adapté pour communiquer avec ledit deuxième module émetteur-récepteur (10) ;
dans lequel ledit premier système de communication sans fil (4) comprend :
- un premier module émetteur-récepteur (8) prévu sur ledit dispositif d'interconnexion principal (5) ; et
- un troisième module émetteur-récepteur (11) prévu sur chaque charge électrique (2) et servant à communiquer avec ledit premier module émetteur-récepteur (8) ; et
dans lequel ledit dispositif d'interconnexion (5) comprend :
- des moyens d'interface (9) adaptés pour interfacer lesdits premier et deuxième systèmes de communication sans fil (4, 6) pour convertir le protocole de communication et le format de données dudit deuxième système de communication sans fil (6) en protocole de communication et en format de données dudit premier système de communication sans fil (4), et vice versa.

2. Véhicule selon l'une quelconque des revendications précédentes, dans lequel ledit deuxième système de communication sans fil (6) est basé sur la technologie Bluetooth.

3. Véhicule selon l'une quelconque des revendications précédentes, dans lequel ledit premier système de communication sans fil (4) est basé sur la technologie ZigBee.

4. Véhicule selon l'une quelconque des revendications précédentes, dans lequel ledit deuxième système de communication sans fil (6) est basé sur la technologie Wi-Fi.

5. Véhicule selon l'une quelconque des revendications précédentes, dans lequel ledit véhicule est un véhicule à moteur.
